# EUROPÄISCHE PATENTSCHRIFT

(11) **EP 0 689 519 B1**
(45) Veröffentlichungstag und Bekanntmachung des Hinweises auf die Patenterteilung: **22.10.1997**
(21) Anmeldenummer: 94911887.1
(22) Anmeldetag: 15.03.1994
(51) Int. Cl.: C01F 7/46, C01F 7/02, C08K 3/22

(54) **KRISTALLINES ALUMINIUMHYDROXID**
CRYSTALLINE ALUMINIUM HYDROXIDE
HYDROXYDE D'ALUMINIUM CRISTALLIN

(30) Priorität: 15.03.1993 DE 4308176
(43) Veröffentlichungstag der Anmeldung: 03.01.1996
(73) Patentinhaber: MARTINSWERK G.m.b.H., für chemische und metallurgische Produktion, D-50127 Bergheim (DE)
(72) Erfinder: BROWN, Neil, D-50127 Bergheim/Erft (DE); VAN PEIJ, Detlef, D-50181 Bedburg/Erft (DE); BONGARTZ, Hans, D-50189 Elsdorf (DE); KOHLER, Dagmar, D-41517 Grevenbroich (DE); PÜTZ, Norbert, W., D-50129 Bergheim/Erft (DE)
(74) Vertreter: von Füner, Alexander, Dr.
(86) Internationale Anmeldenummer: EP9400798
(87) Internationale Veröffentlichungsnummer: WO9421559

(56) Entgegenhaltungen:
- EP-A- 0 011 667
- EP-A- 0 253 635
- EP-A- 0 469 257
- US-A- 3 860 688
- C. MISRA 'Industrial alumina chemicals' 1986 , AMERICAN CHEMICAL SOCIETY , WASHINGTON (USA) siehe Seite 61

## Beschreibung

Die Erfindung betrifft ein kristallines Aluminiumhydroxid, welches sich für die Flammfestausrüstung von duroplastischen Kunststoffen eignet.

Insbesondere in duroplastischen Kunststoffen, die im Elektronikbereich Anwendung finden, bestehen Auflagen die toxischen halogenierten Flammfestausrüstungen durch nichthalogenierte zu ersetzen.

Dabei bietet sich Aluminiumhydroxid an, unter der Voraussetzung, dass es bezüglich seiner Eigenschaften gut mit dem duroplastischen Kunststoff verarbeitbar ist und im Hinblick auf die geforderten elektrischen Eigenschaften eine sehr hohe Reinheit aufweist. Ein solches Aluminiumhydroxid, das die beiden genannten Eigenschaften aufweist, ist bislang nicht bekannt.

Es bestand daher die Aufgabe, ein Aluminiumhydroxid zu entwickeln, das das geforderte Eigenschaftsprofil, hohe Reinheit, ausgezeichnete elektrische Eigenschaften und gutes Viskositätsverhalten, aufweist.

Die Aufgabe konnte gelöst werden mit einem kristallinen Aluminiumhydroxid gemäss Patentanspruch 1.

Die nachfolgenden Prozent-Angaben zur Kornverteilung sind Angaben in Gew.% (Gewichtsprozenten).

Dieses kristalline Aluminiumhydroxid weist erfindungsgemäss eine Korngrösse im 50% Bereich d₅₀ von 15 - 50 µm, vorzugsweise von 20 - 35 µm auf.

Die Korngrösse im 10% Bereich d₁₀ liegt zweckmässig zwischen 2 - 6 µm, vorzugsweise zwischen 4 - 6 µm. Die Korngrösse im 90% Bereich d₉₀ liegt zweckmässig zwischen 35 - 100 µm, vorzugsweise zwischen 40 - 95 µm. Wesentlich für die elektrischen Eigenschaften des kristallinen Aluminiumhydroxids ist der Na₂O-Gehalt, welcher erfindungsgemäss ≤ 0.1% und der Na₂O_{löslich}-Gehalt, welcher erfindungsgemäss ≤ 0.005% beträgt. Vorzugsweise ist der Na₂O_{löslich}-Gehalt ≤ 0,004%. Die spezifische Oberfläche gemessen nach BET liegt im Bereich von 0,4 m²/g bis 1,2 m²/g.

Ein Mass für die Reinheit des kristallinen Aluminiumhydroxids ist die elektrische Leitfähigkeit einer 10%igen Suspension in deionisiertem Wasser. Das erfindungsgemässe kristalline Aluminiumhydroxid weist einen Wert von zweckmässig ≤ 25 µS/cm auf.

Die Herstellung des erfindungsgemässen kristallinen Aluminiumhydroxids erfolgt ausgehend von einem speziell kristallisierten Aluminiumhydroxid mit einer Korngrösse im 50% Bereich d₅₀ von 25 - 90 µm, vorzugsweise von 35 - 75 µm, einem Na₂O-Gehalt von < 0.15% und einem Na₂O _{löslich}-Gehalt von < 0.02% . Die Korngrösse des Ausgangs-Aluminiumhydroxids im 10%-Bereich d₁₀ beträgt zweckmässig 10 µm bis 30 µm und im 90%-Bereich d₉ₒ zweckmässig 45 µm bis 150 µm. Die elektrische Leitfähigkeit einer 10%igen Suspension des Ausgangs-Aluminiumhydroxids liegt zweckmässig zwischen 25 µS/cm und 55 µS/cm. Die spezifische Oberfläche nach BET des Ausgangs-Aluminiumhydroxids bewegt sich im Bereich zwischen < 0.1 m²/g und 1,0m²/g.

Das genannte Ausgangs-Aluminiumhydroxid wird zunächst mit heissem Wasser (Temperaturen zweckmässig von 90°C bis 95°C) gewaschen, um den Na₂O-Gehalt zu erniedrigen. Dabei wird zweckmässig so vorgegangen, dass das Aluminiumhydroxid z.B. auf einem Bandfilter mit einer Waschwassermenge von 1.5 m³/t bis 2 m³/t Aluminiumhydroxid behandelt wird.

Das resultierende Aluminiumhydroxid wird darauf zweckmässig getrocknet. Der Na₂O Gehalt dieses Aluminiumhydroxides liegt im Bereich von ≤ 0.1%, der Na₂O Gehalt _{löslich} im Bereich ≤ 0.005%.

Die darauffolgende Desagglomeration erfolgt zweckmässig in einer geeigneten Mühle, vorzugsweise in einer Prallmühle.

Von Vorteil erfolgt die Desagglomeration kontinuierlich.

Im Hinblick auf die erfindungsgemässen Produkteigenschaften ist es wichtig, die Mühlenparameter Sichterdrehzahl (Drehzahl des Rotorkörpers) der Prallmühle und die %-Aufgabe des Produktes (Anteil des kontinuierlich abgezogenen Produktes, Differenz zu 100% wird in die Mühle zurückgeführt) entsprechend einzustellen.

Es hat sich herausgestellt, dass die Sichterdrehzahl zweckmässig im Bereich von 650 bis 950 Umdrehungen/Minute eingestellt wird. Die %-Aufgabe kann im Bereich 35% bis 75% variieren.

Erfindungsgemäss können die resultierenden Aluminiumhydroxide für die Flammfestausrüstung von duroplastischen Kunststoffen wie z. B. von ungesättigten Polyesterharzen, von Acrylharzen oder von Epoxidharzen verwendet werden.

Der Füllgrad rangiert dabei in der üblichen, zur Erreichung der Flammfestigkeit gemäss UL-94 (Underwriter Laboratories), notwendigen Grössenordnung.

Die flammgeschützten Duroplaste zeichnen sich durch ein ausgezeichnetes Viskositätsverhalten bei gleichzeitig aussergewöhnlichen elektrischen Eigenschaften aus.

### Beispiele:

### Beispiel 1:

Herstellung eines kristallinen, desagglomerierten Aluminiumhydroxides. Das aus dem Bayer-Prozess speziell kristallisierte Aluminiumhydroxid mit folgenden Eigenschaften:
- d₁₀ (µm) : 20,4
- d₅₀ (µm) : 40,9
- d₉₀ (µm) : 66,7
- Na₂O_{löslich} (%) : 0,005
- Na₂O (%) : 0,054
- Leitfähigkeit (µS/cm, : 26 10% Suspension in deion. Wasser)
- spez. Oberfläche nach BET : 0,3 m²/g
wurde auf einem Bandfilter mit einer Waschwassermenge (95°C) von 1,8 m³/t behandelt und über einen Stromtrockner bis auf eine Feuchte von 0,15% getrocknet.
Das so behandelte Aluminiumhydroxid wurde dann in einer Prallmühle (ACM-Mühle) durch deren spezielle Pralltechnik bei einer Aufgabe von ca. 70%, einer Sichterleistung von 850 upm und ohne Einsatz von Prallkörpern desagglomeriert.

Das aus dem o.g. Verfahren resultierende Aluminiumhydroxid wies die folgenden Eigenschaften auf:
- d₁₀ (µm) : 3,5
- d₅₀ (µm) : 23,0
- d₉₀ (µm) : 42,9
- Na₂O_{löslich} (%) : 0,003
- Na₂O (%) : 0,049
- Leitfähigkeit (µS/cm) : 15 (10% Suspension in deion. Wasser)
- spez. Oberfläche nach BET 0,44 m²/g

Zur Messung des Viskositätsverhaltens wurden 150 Gewichtsteile des erhaltenen Aluminiumhydroxids in 100 Teilen des ungesättigten Polyesterharzes (Synolite 0020 N-2; DSM Resins BV) gemischt. Die Verarbeitungsviskosität wurde mit einem Brookfield HBT Viskosimeter mit Spindel 3, bei 23°C gemessen.
- Ausgangshydroxid: 165 Pas - desagglomeriertes Hydroxid: 52 Pas

### Beispiel 2:

Entsprechend Beispiel 1 wurde aus einem Aluminiumhydroxid mit folgenden Eigenschaften:

| | |
|---|---|
| d₁₀ (µm) | 26 |
| d₅₀ (µm) | 70 |
| d₉₀ (µm) | 100 |
| Na₂O_{löslich} (%) | 0,015 |
| Na₂O (%) | 0,121 |
| Leitfähigkeit (µS/cm) | 50 |
| 10% Suspension in deion. Wasser | |
| spez. Oberfläche nach BET (m²/g) | < 0,1 |

ein Aluminiumhydroxid mit folgenden Eigenschaften gewonnen.

| | |
|---|---|
| d₁₀ (µm) | 5,9 |
| d₅₀ (µm) | 34 |
| d₉₀ (µm) | 93 |
| Na₂O_{löslich} (%) | 0,0034 |
| Na₂O (%) | 0,093 |
| Leitfähigkeit (µS/cm) | 22 |
| 10% Suspension in deion. Wasser | |
| spez. Oberfläche nach BET (m²/g) | 0,44 |

Zur Messung des Viskositätsverhaltens wurden 150 Gewichtsteile des erhaltenen Aluminiumhydroxids in 100 Teilen des ungesättigten Polyesterharzes (Synolite 0020 N-2; DSM Resins BV) gemischt. Die Verarbeitungsviskosität wurde mit einem Brookfield HBT Viskosimeter mit Spindel 3, bei 23°C gemessen.
- Ausgangshydroxid: 368 Pas - desagglomeriertes Hydroxid: 38 Pas

### Beispiel 3:

Viskositätsverhalten von weiteren kristallinen, desagglomerierten Aluminiumhydroxiden in UP-Harzen (Synolite 0020 N-2).

Das desagglomerierte Aluminiumhydroxid weist im Vergleich zu dem speziell kristallisierten Ausgangsprodukt, je nach Desagglomerationsgrad, eine sinkende Verarbeitungsviskosität (hier in Synolite 0020 N-2) auf.

### Beispiel:

| | | |
|---|---|---|
| Ausgangshydrat | d₁₀(µm) | 15,9 |
| | d₅₀(µm) | 36,3 |
| | d₉₀(µm) | 62,0 |
| | Viskosität bei 150 phr* | 150 Pas |
| | | |
| Desagglomeriertes Hydrat Nr. 1 | d₁₀(µm) | 5,1 |
| | d₅₀(µm) | 24,6 |
| | d₉₀(µm) | 46,0 |
| | Viskosität bei 150 phr* | 57 Pas |
| | | |
| Desagglomeriertes Hydrat Nr. 2 | d₁₀(µm) | 3,5 |
| | d₅₀(µm) | 18,3 |
| | d₉₀(µm) | 39,6 |
| | Viskosität bei 150 phr* | 41 Pas |

| | | |
|---|---|---|
| * Messbedingungen: Brookfield HBT; Spindel 3; 23°C | | |

### Beispiel 4:

Das im Beispiel 2 erhaltene Al(OH)₃ wurde im Vergleich zu kommerziell erhältlichen Aluminiumhydroxiden bezüglich dem Viskositätsverhalten und den elektrischen Eigenschaften getestet.

### Vergleichs-Aluminiumhydroxide:

| | Apyral 2 (VAW) | Higilite H 320 I(Showa Denko) |
|---|---|---|
| d₅₀ (µm) | 20 - 25 | 10 |
| Na₂O löslich (%) | 0,05 | 0,001 |
| Na₂O (%) | 0,25 | 0,06 |
| spez. Oberfläche nach BET (m²/g) | 0,2 | 3,5 |
| >50 µm (%) | 10 - 20 | 0 |
| < 5 µm (%) | 5 - 15 | 25 - 35 |

120 Gewichtsteile der betreffenden Aluminiumhydroxide wurden in 100 Teile des Epoxidharzes Rütapox 0167 (Bakelite AG, Duisburg) eingearbeitet. Die Viskositätsmessungen wurden entsprechend den Bedingungen in Beispiel 1 bis 3 durchgeführt.
Für eine Messreihe wurde der Harzmischung 1 Gew.% bezogen auf das Aluminiumhydroxid des Viskositätsverminderers BYK®-W 995 (BYK Chemie) zugesetzt.

| Ergebnisse in Pas | ohne BYK-W 995 | mit BYK-W 995 |
|---|---|---|
| Al(OH)₃ gemäss Beispiel 2 | 87 | 54 |
| Apyral 2 | 73 | 53 |
| Higilite H 320 I | 138 | 65 |

Zur Messung der elektrischen Eigenschaften (Durchschlagsfestigkeit) wurde ein gegossener Formkörper gemäss IEC-Norm 243 (3 mm, 20s bei 22°C) in einem Dampfdrucktopf bei 1,2 bis 1,5 bar und 121°C über 1, 2 und 3 Tage gelagert.

| Ergebnisse in kV/mm | nach 0 | 1 | 2 | 3 (Tagen) |
|---|---|---|---|---|
| Al(OH)₃ gemäss Beispiel 2 | 27 | 24 | 22 | 22 |
| Apyral 2 | 29 | 7 | 6 | 5 |
| Higilite H 320 I | 28 | 17 | 16 | 16 |

Für die Messung der Flammfestigkeit gemäss UL-94-Norm wies das genannte Epoxidharz einen Füllgrad von 60 Gew.% auf. Es resultierte eine Klassierung von VO.

## Patentansprüche

1. Kristallines Aluminiumhydroxid, **gekennzeichnet** durch eine Korngröße im 50%-Bereich d₅₀ von 15 - 50 µm, einen Na₂O-Gehalt von ≤ 0,1%, einen Na₂O_{löslich}-Gehalt von ≤ 0,005% und eine spezifische Oberfläche nach BET von 0,4 m²/g bis 1,2 m²/g.

2. Kristallines Aluminiumhydroxid nach Patentanspruch 1, **gekennzeichnet** durch eine Korngröße im 10%-Bereich d₁₀ von 2 - 6 µm und im 90%-Bereich d₉₀ von 35 - 100 µm.

3. Kristallines Aluminiumhydroxid nach einem der Patentansprüche 1 bis 2, **gekennzeichnet** durch die elektrische Leitfähigkeit einer 10% Suspension des kristallinen Aluminiumhydroxids in deionisiertem Wasser von ≤ 25 µS/cm.

4. Verfahren zur Herstellung eines kristallinen Aluminiumhydroxids mit den Eigenschaften gemäß einem der Patentansprüche 1 bis 3, **gekennzeichnet** durch Waschen eines Aluminiumhydroxids mit einer Korngröße im 50%-Bereich d₅₀ von 25 - 95 µm, einem Na₂O-Gehalt von ≤ 0,15% und einem Na₂O_{löslich}-Gehalt von ≤ 0,02% mit heißem Wasser und anschließender Desagglomeration des erhaltenen Aluminiumhydroxids.

5. Verwendung eines kristallinen Aluminiumhydroxids gemäß einem der Ansprüche 1 bis 3 als Füllstoff zur Flammfestausrüstung von duroplastischen Kunststoffen.

6. Flammgeschützte Duroplaste, enthaltend ein kristallines Aluminiumhydroxid gemäß einem der Ansprüche 1 bis 3.

## Claims

1. Crystalline aluminium hydroxide, characterised by a particle size in the 50% range d₅₀ of from 15 to 50 µm, an Na₂O content of ≤ 0.1%, an Na₂O_{soluble} content of ≤ 0.005% and a specific surface according to BET of from 0.4 m²/g to 1.2 m²/g.

2. Crystalline aluminium hydroxide according to claim 1, characterised by a particle size in the 10% range d₁₀ of from 2 to 6 µm and in the 90% range d₉₀ of from 35 to 100 µm.

3. Crystalline aluminium hydroxide according to one of claims 1 or 2, characterised in that the electrical conductivity of a 10% suspension of the crystalline aluminium hydroxide in deionised water is ≤ 25 µS/cm.

4. Process for the preparation of a crystalline aluminium hydroxide having the properties according to one of claims 1 to 3, characterised in that an aluminium hydroxide having a particle size in the 50% range d₅₀ of from 25 to 95 µm, an Na₂O content of ≤ 0.15% and an Na₂O_{soluble} content of ≤ 0.02% is washed with hot water and the aluminium hydroxide obtained is subsequently deagglomerated.

5. Use of a crystalline aluminium hydroxide according to one of claims 1 to 3 as a filler for the flameproof finish of thermosetting plastics.

6. Flameproofed thermosetting plastics, containing a crystalline aluminium hydroxide according to one of claims 1 to 3.

## Revendications

1. Hydroxyde d'aluminium cristallin caractérisé par une granulométrie dans la plage de 50 % d₅₀ de 15 - 50 µm, une teneur en Na₂O ≤ 0,1 %, une teneur en Na₂O_{soluble} ≤ 0,005% et une surface spécifique selon BET de 0,4 m²/g jusqu'à 1,2 m²/g.

2. Hydroxyde d'aluminium cristallin selon la revendication 1, caractérisé par une granulométrie dans la plage de 10 % d₁₀ de 2 - 6 µm et dans la plage de 90 % d₉₀ de 35 - 100 µm.

3. Hydroxyde d'aluminium cristallin selon l'une des revendications 1 à 2, caractérisé par la conductivité électrique d'une suspension à 10 % hydroxyde d'aluminium cristallin dans de l'eau désionisée ≤ 25 µS/cm.

4. Procédé pour la préparation d'un hydroxyde d'aluminium cristallin ayant les propriétés selon les revendications 1 à 3, caractérisé par le lavage d'un hydroxyde d'aluminium avec une granulométrie dans la plage 50 % d₅₀ de 25 - 95 µm, une teneur en Na₂O ≤ 0,15 % et une teneur en Na₂O_{soluble} ≤ 0,002 % avec de l'eau chaude et la désagglomération consécutive de l'hydroxyde d'aluminium obtenu.

5. Utilisation d'un hydroxyde d'aluminium cristallin selon l'une des revendications 1 à 3, en tant que matière de charge pour le garnissage ininflammable de matières synthétiques thermodurcissables.

6. Matière thermodurcissable ininflammable contenant un hydroxyde d'aluminium cristallin selon l'une des revendications 1 à 3.
